# EUROPEAN PATENT APPLICATION

(11) **EP 3 205 446 A2**
(43) Date of publication of application: **16.08.2017**
(21) Application number: 17154756.5
(22) Date of filing: 06.02.2017
(51) Int. Cl.: B23Q 1/66, B23Q 7/04

(54) **AUTOMATIC MACHINE FOR MACHINING INNER OR CENTRING RINGS OF SPIRALLY WOUND SEALS**

(30) Priority: 12.02.2016 IT UB20160699
(71) Applicant: GSKET S.r.l., 26013 Crema (CR) (IT)
(72) Inventor: BAROZZI, Gian Piero, 26013 Crema (CR) (IT)
(74) Representative: Raimondi, Margherita

(57) **Abstract**

Machine for machining inner or centring rings of spirally wound seals, comprising:
- a base (1100) which supports a column (1110) extending in a vertical direction (Z-Z);
- a head (1200) with machining tool (1211) movable on the column (1110) in both senses of the vertical direction (Z-Z) from a raised rest position into a lowered working position and vice versa;
- a rotating table (1300) attached to the base (1100) and provided with at least two means (1311a,1311b) for retaining the rings (1);
- said retaining means are positioned relative to each other at a suitable angular distance so as to be arranged alternately below and coaxial with the machining tool (1211) or in a loading/unloading position underneath and coaxial with gripping/releasing means (1430) of a feeding/unloading device (1400);
- a device (1400) for loading/unloading the rings (1), displaceable in both senses of the vertical direction from a raised position into a lowered position and rotating about the same vertical direction;
- at least two means for gripping/releasing the rings (1) of the feeding/unloading device and movable therewith respectively from a position for gripping a ring to be machined into a position for feeding said ring to the loading/unloading retaining means and from a position for gripping of the machined rings by the loading/unloading retaining means to a position for unloading said rings outside of the machine and vice versa.

## Description

The present invention relates to a machine for machining inner or centring rings of spirally wound seals.

In the art numerous types of seals made in the form of rings and designed to perform static frontal sealing, for example of pipe connections, are known.

It is also known that for the industrial production of these types of seals it is necessary to wind up in a spiral two strips which are superimposed on each other and have physical and mechanical characteristics which are very different from each other, with winding in particular of a first strip which has a high mechanical strength - being for example made of steel - and which forms the support for the second strip made of a material having high insulating and sealing characteristics, but a lower mechanical strength. Depending on the intended use of said so-called "spirally wound" seals, it is envisaged that they are completed with a ring made of a material having a high mechanical strength, such as steel, arranged on the inside (inner ring) and/or on the outside (centring ring) of the said seal; these inner and/or centring rings must undergo a machining operation, normally turning, in order to form a respective hollow seat or a cusp.

Examples of machines known in the art are described in EP 0 453 710 and US 4 829 716 according to which the ring is hold by chucks mounted on a rotating table that rotates continuously during the action of at least two spindles in turn mounted on a carriage that moves from a working position to a loading/unloading position.

This means that the tools are periodically inoperative causing the need of switching on/switching off and moving downtimes.

The technical problem which is posed, therefore, is that of providing a machine for machining inner or centring rings for seals
of the spirally wound type, which performs mechanical finishing thereof with a high degree of precision, at high speed and with limited machine downtime.

In connection with this problem it is also required that this machine should be able to reduce the time for loading/unloading the part to be machined. These results are achieved according to the invention by a machine for machining inner/centring rings of spirally wound seals according to the characteristic features of Claim 1.

Further details may be obtained from the following description of a non-limiting example of embodiment of the subject of the present invention, provided with reference to the accompanying drawings, in which:
Figure 1: is a perspective view of the machine according to the invention with auxiliary loading/unloading apparatus;
Figure 2: is a partial perspective view, on a larger scale, of a detail of the machine according to Fig. 1;

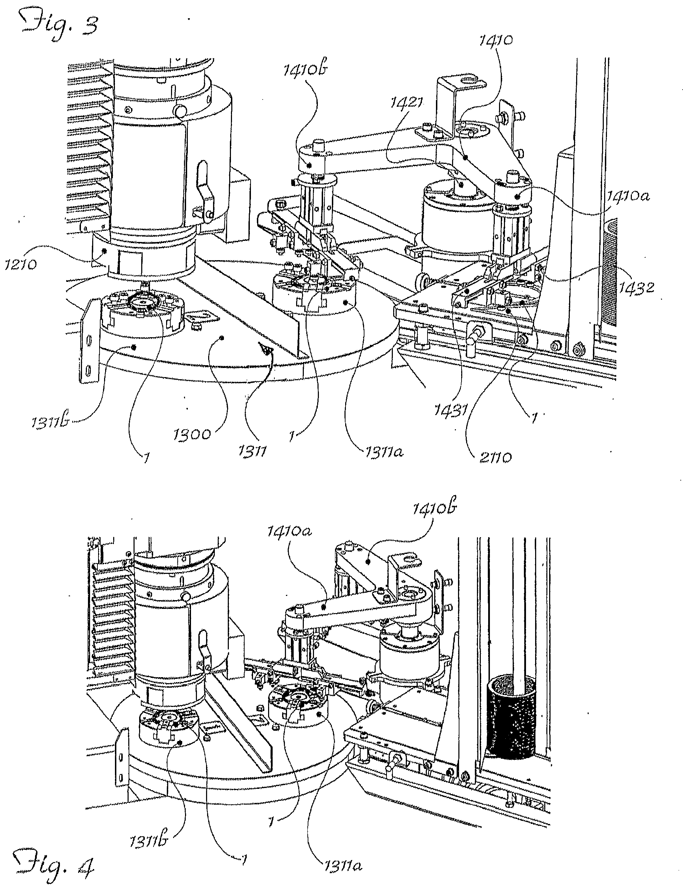

Figure 3: is a partial perspective view of the machine during feeding of a ring to be machined to the gripping means for loading;
Figure 4: is a partial perspective view of the machine during deposition of a ring to be machined on the retaining means for machining;

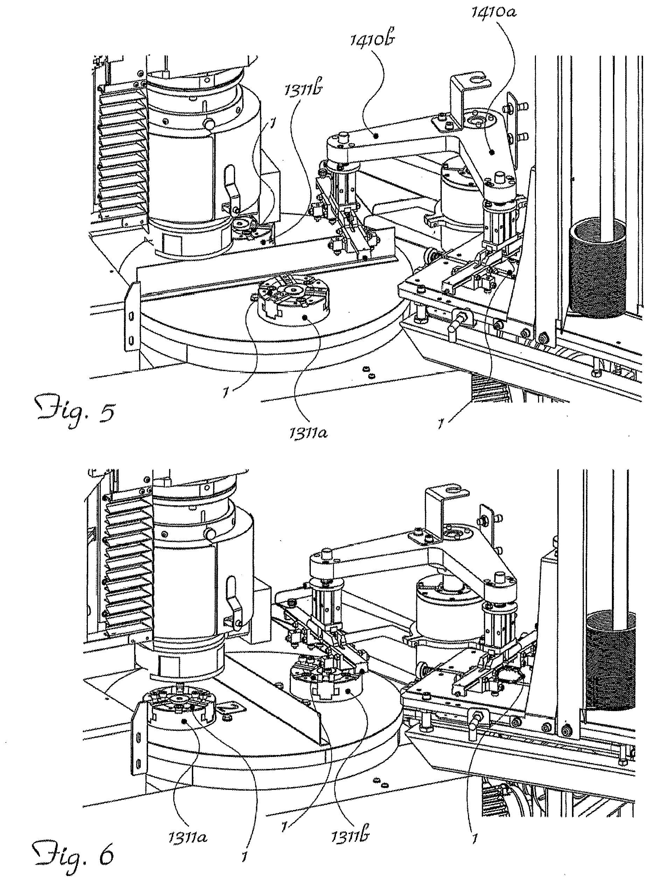

Figure 5: is a partial perspective view of the machine during transportation of the ring to the machining means;
Figure 6: is a partial perspective view of the machine during machining of a ring, gripping of a machined ring by the gripping/unloading means and picking up of a ring to be machined by the gripping/feeding means; and

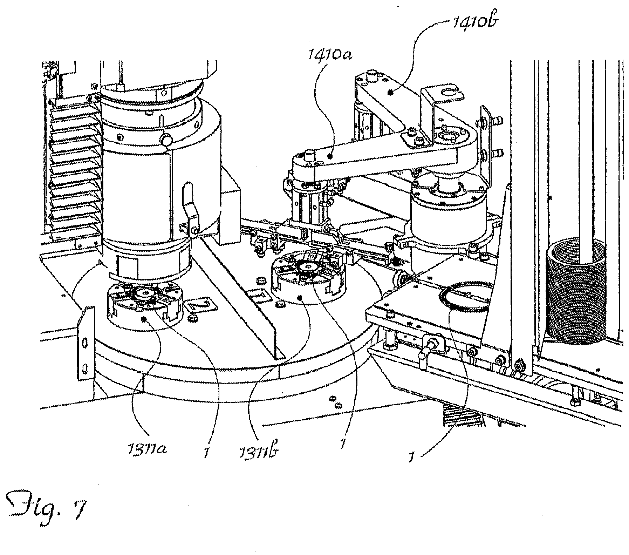

Figure 7: is a partial perspective view of the machine during unloading of a machined ring and feeding of a new ring to be machine into the loading position.

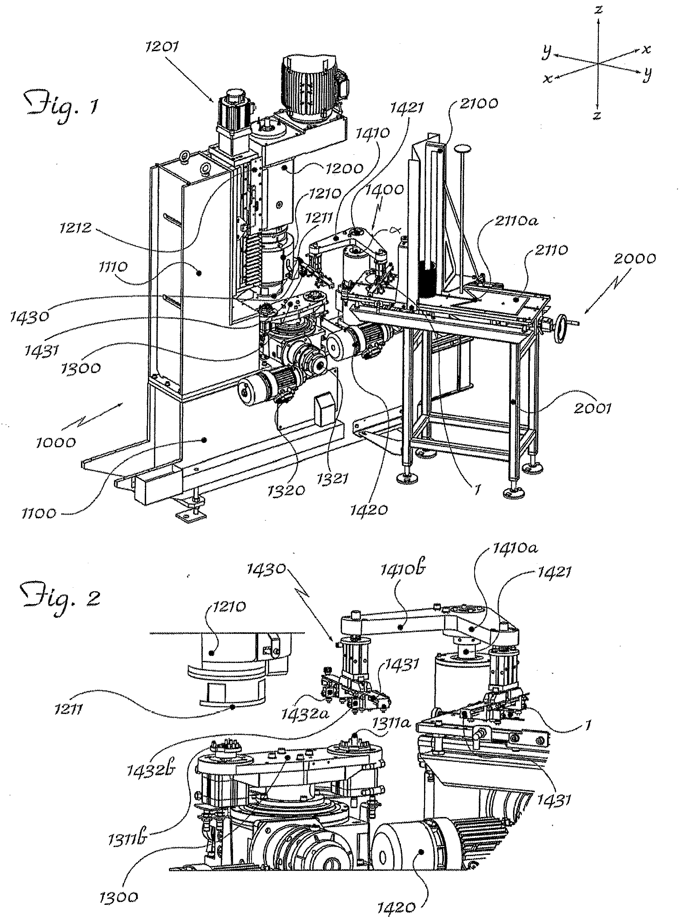

As shown in Fig. 1 and assuming solely for the sake of easier description and without a limiting meaning: a transverse direction Y-Y, corresponding to a possible direction of feeding of the ring 1 to the gripping/releasing means and a vertical direction Z-Z, corresponding to the direction of movement of the means for machining the seal; the example of the machine 1000 according to the invention shown in the Figures comprises:
- a base 1100 which supports a column 1110 extending in the vertical direction Z-Z and in turn carrying vertical guides 1212;
- a machining head 1200 which carries the drive unit 1210 for rotating a tool 1211; preferably the head 1200 is fixed to sliding shoes 1211 sliding in the two senses of the vertical direction on the guides 1212 upon operation of a motor 1201;
- the head is therefore movable in the vertical direction from a raised rest position to a lowered working position and vice versa;
- a table 1300 is attached to the base 1100 and has means 1311 for retaining rings 1, which means are arranged at a suitable angular distance from each other;
- said table is moved rotationally by means of a motor 1320 and reducer 1321; preferably said retaining means comprise self-centring chucks with radially movable jaws for gripping on the inside in the case of machining of the outer edge of the inner ring or on the outside in the case of machining of the inner edge of the containing ring;
- the said means 1311 for retaining the rings 1 are at least two in number, i.e. 1311a,1311b as in the example shown, and are arranged relative to each other at an angular distance of 180°, so as to be arranged alternately underneath and coaxial with the machining head 1210 or the gripping/releasing means of a feeding/unloading device 1400 described more fully below;
- the same base 1100 also has arranged thereon the said device 1400 for feeding/unloading the rings 1, which comprises:
   - a vertical shaft 1421 alternately moved by a gearmotor 1420 rotationally about a vertical axis and displaceably in both senses of the same vertical direction from a raised position to a lowered position; the upper free end of the shaft has, mounted thereon, an arm 1410 formed by two portions, i.e. one portion 1410a for gripping/feeding and one portion 1410b for gripping/unloading, which are angularly spaced at a suitable angle α,
   - the free end of the two portions 1410a,1410b have, mounted thereon, the means for gripping/releasing the rings 1, which comprise: a gripper 1430, the jaws 1432a,1432b of which are displaceable on a rod 1431 from an open position into a closed position for gripping and retaining the ring 1.
      The gripping/feeding portion 1410a and gripping/unloading portion 1410b move rotationally, respectively from a position for gripping a ring 1 to be machined into a position for releasing the same onto a loading/unloading chuck and from a position for gripping of a machined ring by the loading/unloading chuck into an angularly outer position for unloading the machined ring.

With this configuration the operating principle of the machine is as follows:
- after prearranging the machining head 1210 and vertical shaft 1421 with arm 1410 of the gripping means in the raised position, so that one of the two chucks is in a position coaxial with the machining head 1200 and the other chuck is in an angular loading/unloading position and the free end of the portions 1410a,1410b is in a position respectively coaxial with the position for gripping the rings 1 to be machined and the gripping/releasing position for performing loading/unloading onto one of the two chucks 1311a,1311b;
- rotating the rotating head and then the tool 1211;
- feeding a ring 1 to be machined into the gripping position;
- lowering the gripping means 1431 and causing closing of the gripper 1432 which takes hold of the ring;
- raising again the arm 1410;
- rotating the arm 1410 through said angle α so as to bring the feeding gripper 1432 and therefore the ring 1 to be machined into a position coaxial with the first chuck 1311a of the rotating table 1300;
- lowering the gripping means and opening the gripper 1432 so as to release the ring 1 to the first chuck 1311a which, radially displacing its movable segments, locks the seal, retaining it in the centred position;
- rotating the rotating table 1300 through 180° so as to bring the first chuck 1311a with the ring 1 underneath the machining head 1200;
- lowering the head 1200 into the working position, causing the desired machining of the stationary inner ring or the outer ring;
- during machining, rotation of the feeding/unloading means 1400 through the same angle α, but in the opposite direction, so as to bring the first gripping/feeding portion 1410a into the position for gripping a new ring 1 to be machined and the gripping/unloading portion 1410b into a position coaxial with the chuck which holds the machined ring 1;
- once machining has been completed, raising the head 1210 and rotating the rotating table 1330 through 180° so as to bring the first chuck 1311a into the loading/unloading position and the second chuck 1311b into the machining position;
- lowering the gripping means 1300 so that the gripper 1432 fixed to the gripping/feeding portion 1410a picks up a new ring 1 to be machined and at the same the gripper 1432 fixed to the gripping/unloading portion 1410b picks up the machined ring 1 from the first chuck 1311a;
- rotating again through the angle α the gripping means 1440 so as to bring the gripping/releasing means 1410b into the unloading position and the gripping/feeding means 1410a in alignment with the retaining chuck into the position for loading a new ring 1 to be machined;
- opening in a coordinated manner the two grippers 1432a,1432b so as to cause release of the machined ring 1 into the unloading position outside of the machine and release of the new ring to be machined onto the chuck 1432a/b in the loading position.

By repeating the sequence described above an automatic cycle is obtained such that there is always a stationary ring 1 being machined on the respective machining chuck, a ring 1 to be machined being picked up from the pick-up position and a ring 1 mounted on the loading/unloading chuck.

It is therefore clear how with the machine according to the invention it is possible to reduce the machining downtime owing to synchronization of the various movements for loading/unloading and feeding the seals to the machining head and because it is possible to keep the tool continuously rotating, thus further reducing the machining time and avoiding the downtime due to starting/stopping of the said tool at the start/end of machining. According to a preferred embodiment of the machine according to the invention, it is envisaged that the same machine comprises an automatic device 2000 for feeding rings 1 to be machined into the position for gripping by the gripping/feeding means 1400; said device 2000 comprising a table 2001 on the surface of which the following are provided:
- a magazine 2100 for accumulating and guiding rings 1 to be machined, stacked in the vertical direction and
- a plate 2110, displaceable in the transverse direction Y-Y, from a retracted position into an advanced position corresponding to the position for gripping of the ring 1 by the gripping means, so that during the stroke a ring to be machined is picked up and pushed towards the said gripping position.

Preferably, the table has one end 2110a directed towards the gripping means of the machine and shaped as a "hollow V", so as to allow the gripping and transportation of rings of varying diameter.

The synchronized movement of the table with the already described moving parts of the machine 1000 allows automatic feeding of rings 1 for gripping and movement thereof.

Although not shown, it is envisaged that the rotating table 1300 may have more than two chucks with corresponding smaller angular distances (e.g. three chucks spaced at 120°) so as to further reduce the cycle downtime.

It is also envisaged that the device for loading/unloading the rings 1 may be moved by means of displacements rather than rotations.

According to the invention it is also envisaged that the tool may operate on the front surface orthogonal to the vertical axis Z-Z for the formation of grooves (cam profile).

Although described in connection with a number of embodiments and a number of preferred examples of embodiment of the invention, it is understood that the scope of protection of the present patent is determined solely by the claims below.

## Claims

1. Machine for machining inner or centring rings of spirally wound seals, comprising:
- a base (1100) which supports a column (1110) extending in a vertical direction (Z-Z); **characterized in that** it comprises
- a head (1200) with a continuously rotating machining tool (1211), movable on the column (1110) in both senses of the vertical direction (Z-Z) from a raised rest position into a lowered working position and vice versa;
- a rotating table (1300) attached to the base 1100 and provided with at least two means (1311a,1311b) for retaining the rings (1) stationary;
- said retaining means are positioned relative to each other at a suitable angular distance so as to be arranged alternately below and coaxial with the machining tool (1211) or in a loading/unloading position underneath and coaxial with gripping/releasing means (1430) of a feeding/unloading device (1400);
- a device (1400) for loading/unloading the rings (1) displaceable in both senses of the vertical direction from a raised position into a lowered position and rotating about the same vertical direction;
- at least two means for gripping/releasing the rings (1) of the feeding/unloading device and movable therewith respectively from a position for gripping a ring to be machined into a position for feeding said ring to the loading/unloading retaining means and from a position for gripping of the machined rings by the loading/unloading retaining means to a position for unloading said rings outside of the machine and vice versa.

2. Machine according to Claim 1, **characterized in that** said retaining means (1311) comprise self-centring chucks (1311a,1311b) with jaws movable radially for gripping on the inside in the case of machining of the outer edge of an inner ring or on the outside in the case of machining of the inner edge of a containing ring.

3. Machine according to Claim 1 or 2, **characterized in that** said device (1400) for loading/unloading the rings (1) comprises:
- a vertical shaft (1421) moved displaceably in both senses of a vertical direction from a raised position into a lowered position and vice versa and alternately rotating through a suitable angle (α) about the same vertical axis of displacement.

4. Machine according to Claim 3, **characterized in that** it comprises an arm (1410) mounted on the upper free end of the vertical shaft (1421), said arm comprising two portions, one (1410a) for gripping/feeding and one (1410b) for gripping/unloading the rings (1), said portions being angularly spaced from each other by a suitable angle (α), each portion being provided with a respective means for gripping/releasing the rings (1).

5. Machine according to any one of the preceding claims, **characterized in that** said means for gripping/releasing the rings (1) comprise a gripper (1430), the jaws (1432a,1432b) of which are displaceable on a rod (1431) from an open position into a closed position for gripping and retaining the rings (1) and vice versa.

6. Machine according to any one of the preceding claims, **characterized in that** it comprises a device (2000) for automatically feeding rings (1) to be machined into the position for gripping by the gripping/feeding means.

7. Machine according to Claim 6, **characterized in that** said device (2000) comprises a table (2001) on the surface of which the following are arranged:
- a magazine (2100) for accumulating and guiding rings (1) to be machined, stacked in the vertical direction (Z-Z) and
- a plate (2110), displaceable in the transverse direction (Y-Y), from a retracted position into an advanced position corresponding to the position for gripping of the ring (12) by the gripping means.

8. Machine according to Claim 7, **characterized in that** the plate (2110) has one end (2110a) directed towards the gripping means of the machine, shaped as a "hollow V" for gripping and transporting seals of varying diameter.

9. Machine according to any one of the preceding claims, **characterized in that** the tool machines the surface of the front ring, orthogonal with respect to the vertical axis (Z-Z).

10. Method for performing the machining, using a machine according to any one of Claims 1-9 of inner or centring rings of spirally wound seals, **characterized in that** it comprises the following steps:
- prearranging the head (1210) with tool and vertical shaft (1421) with means for gripping/releasing in the raised position;
- prearranging the rotating table (1300) with one means (1311a,1311b) for retaining the rings (1) arranged underneath and coaxial with the machining tool (1211) and with the other means (1311a,1311b) for retaining the ring in the loading/unloading position aligned with the gripping/releasing means (1430) of the feeding/unloading device (1400);
- prearranging the gripping/releasing means (1410a,1410b) in a position respectively coaxial with the position for gripping a ring (1) to be machined and in the gripping/releasing position for loading/unloading the ring onto one of the retaining means (1311a,1311b);
- starting and maintaining the rotational driving of the head and the tool (1211);
- feeding a ring (1) to be machined into the gripping position;
- lowering the gripping/releasing means (1431) into the gripping position and gripping the ring (1) to be machined;
- raising and rotating the feeding/unloading device and the associated gripping/releasing means so as to bring the gripping and releasing means and the ring (1) to be machined into the position coaxial with the retaining means (1311a) of the rotating table (1300) in the loading/unloading position;
- lowering the feeding/unloading device and the associated gripping/releasing means and releasing the ring (1) to be machined to the loading/unloading retaining means (1311) which keep the ring (1) to be machined in position;
- rotating the rotating table (1300) so as to bring one retaining means (1311a) with ring (1) to be machined underneath the working head (1200) and the other retaining means (1311b) into the loading/unloading position;
- lowering the head (1200) with tool into the machining position with execution of the required machining of the stationary ring;
- during machining by the tool, rotating the feeding/unloading device (1400) so as to bring the gripping/releasing means into the position for gripping a new ring (1) to be machined and then into a position coaxial with the other means for retaining said ring in the loading/unloading position, with release of the new ring to be machined and retaining thereof on the other retaining means (1311b), followed by return of the feeding/unloading device into the initial position;
- once machining has been completed, raising the head (1210) and rotating the rotating table (1300) so as to bring the retaining means (1311a) with the machined ring (1) into the loading/unloading position and the other retaining means (1311b) with the new ring to be machined into the working position;
- lowering the feeding/unloading device with gripping of a new ring (1) to be machined and simultaneous removal of the machined ring (1) by the gripping/releasing means aligned with the means for retaining the ring in the loading/unloading position;
- raising and rotating the feeding/unloading device (1400) so as to bring the gripping/releasing means (1410b;1410a) respectively into the unloading position and into the gripping/releasing position aligned with the means for retaining a new ring (1) to be machined in the loading/unloading position;
- unloading the machined ring outside of the machine and releasing the ring to be machined to the loading/unloading retaining means.
